# EUROPEAN PATENT APPLICATION

(11) **EP 4 632 656 A1**
(43) Date of publication of application: **15.10.2025**
(21) Application number: 24218657.5
(22) Date of filing: 10.12.2024
(51) Int. Cl.: G06Q 30/015, G06Q 30/0241, G06Q 30/02, G06Q 30/0601

(54) **INFORMATION PROCESSING DEVICE AND INFORMATION PROCESSING METHOD FOR IN-STORE SHOPPING SUPPORT**

(30) Priority: 10.04.2024 JP 2024063352
(71) Applicant: Toshiba TEC Kabushiki Kaisha, Tokyo 141-8562 (JP)
(72) Inventor: KAWAGUTI, Takesi, Shinagawa-ku, Tokyo, 141-8562 (JP)
(74) Representative: Hoffmann Eitle

(57) **Abstract**

According to one embodiment, an information processing device for in-store customer shopping support has a processor connected to a communication interface and a storage unit. The processor receives image information corresponding to an image from a user terminal, executes image analysis processing to identify the content of the image, then acquires question history information correlated to the identified content that corresponds to previous user questions associated with the content in the image. The processor generates candidate questions from the acquired question history information, causes the generated candidate questions to be displayed on the user terminal in a selectable state, then acquires answer text corresponding to a candidate question selected by the user by inputting the selected question candidate to a generative model functionalized to output answer text. The acquired answer text is then provided to the user of the user terminal.

## Description

### CROSS-REFERENCE TO RELATED APPLICATION

This application is based upon and claims the benefit of priority from Japanese Patent Application No. 2024-063352, filed April 10, 2024, the entire contents of which are incorporated herein by reference.

### FIELD

Embodiments described herein relate generally to an information processing device and an information processing method for providing support to customers shopping at a retail store or the like.

### BACKGROUND

Recently, techniques of automatically generating text or sentences using an AI model (also referred to as generative AI) has been proposed. Such an AI model may be a large language model (LLM). A LLM is an AI model trained in the field of natural language processing on a large-scale corpus. Such a model may be functionalized in such when text of a question is inputted as a prompt, which may include additional information indicating a requested output form or format, an answer to the question content is generated and then output in the requested output form/format, such as text.

It is also conceivable that a service using an AI model like the above might be used as an automated answering service for customers of a store. For example, it is conceivable that a shopping support service to give an AI automated answer to a question from a customer might be provided at a retail store such as a supermarket.

In connection with AI models, it is generally known that when questions are properly or particularly input, there can be an improvement in the accuracy of the answers provided. Therefore, if a question is not properly input, the user may not be able to acquire an appropriate answer as intended. For example, in an environment like a store, some users may not be very familiar with machine operations or use of AI prompts and thus such users may not be able to input questions to the AI model-based question answering service. However, a technique that can support all types of user operations at a store or the like is desired.

### SUMMARY OF THE INVENTION

One of the objects of the present invention is to improve prior art techniques and overcome at least some of the prior art problems as for instance above illustrated.

According to a first aspect of the present invention, it is provided an information processing device for in-store customer shopping support, the device comprising a communication interface; a storage unit; and a processor connected to the communication interface and the storage unit, the processor configured to receive image information corresponding to an image from a user terminal via the communication interface; execute image analysis processing on the image information to identify content of the image from the user terminal; acquire question history information correlated to the identified content of the image from the storage unit, the question history information corresponding to previous user questions associated with the content of the image; generate candidate questions from the acquired question history information; cause the generated candidate questions to be displayed to a user of the user terminal in a selectable state; acquire answer text corresponding to a candidate question selected by the user by inputting the selected question candidate to a generative model functionalized to output answer text; and cause the acquired answer text to be provided to the user of the user terminal.

Optionally, in the information processing device according to the first aspect of the invention, the processor is further configured to acquire merchandise information when the content of the image is a merchandise item; and include the acquired merchandise information in the answer text.

Optionally, in the information processing device according to the first aspect of the invention, the merchandise information is acquired via the communication interface.

Optionally, in the information processing device according to the first aspect of the invention, the merchandise information is acquired from the storage unit.

Optionally, in the information processing device according to the first aspect of the invention, the storage unit is an auxiliary memory device.

Optionally, in the information processing device according to the first aspect of the invention, the image information includes coordinate information indicating a region in the image that has been designated by the user.

Optionally, in the information processing device according to the first aspect of the invention, the processor executes the image analysis processing on the image information to identify the content of the region of the image.

Optionally, in the information processing device according to the first aspect of the invention, the processor is further configured to acquire device information when the content of the image is a device screen; and include the acquired device information in the answer text.

Optionally, in the information processing device according to the first aspect of the invention, the device information includes an operation manual.

Optionally, in the information processing device according to the first aspect of the invention, the processor is further configured to store the selected question candidate and the answer text in correlation with each other in the storage unit as question history information.

According to a second aspect of the invention, it is provided an information processing method for in-store customer shopping support, the method comprising receiving image information corresponding to an image from a user terminal via a communication interface; executing image analysis processing on the image information to identify content of the image from the user terminal; acquiring question history information correlated to the identified content of the image from a storage unit, the question history information corresponding to previous user questions associated with the content of the image; generating candidate questions from the acquired question history information; causing the generated candidate questions to be displayed to a user of the user terminal in a selectable state; acquiring answer text corresponding to a candidate question selected by the user by inputting the selected question candidate to a generative model functionalized to output answer text; and causing the acquired answer text to be provided to the user of the user terminal.

Optionally, the information processing method according to the second aspect of the invention further comprises acquiring merchandise information when the content of the image is a merchandise item; and including the acquired merchandise information in the answer text.

Optionally, in the information processing method according to the second aspect of the invention, the merchandise information is acquired via the communication interface.

Optionally, in the information processing method according to the second aspect of the invention, the merchandise information is acquired from the storage unit.

Optionally, in the information processing method according to the second aspect of the invention, the storage unit is an auxiliary memory device.

Optionally, in the information processing method according to the second aspect of the invention, the image information includes coordinate information indicating a region in the image that has been designated by the user.

Optionally, in the information processing method according to the second aspect of the invention, the image analysis processing on the image information to identifies the content of the region of the image.

Optionally, the information processing method according to the second aspect of the invention further comprises acquiring device information when the content of the image is a device screen; and including the acquired device information in the answer text.

Optionally, in the information processing method according to the second aspect of the invention, the device information includes an operation manual.

Optionally, the information processing method according to the second aspect of the invention further comprises storing the selected question candidate and the answer text in correlation with each other in the storage unit as question history information.

### BRIEF DESCRIPTION OF THE DRAWINGS

FIG. 1 depicts a schematic configuration of an information processing system according to an embodiment.
FIG. 2 is a block diagram of an information processing device.
FIG. 3 is a block diagram depicting a functional configuration of an information processing device.
FIG. 4 depicts an example of image information.
FIG. 5 depicts an example of a question candidate display.
FIG. 6 depicts an example of an answer information display.
FIG. 7 is a flowchart of control processing of an information processing device.
FIG. 8 is a flowchart of control processing of an information processing device.
FIG. 9 is a block diagram depicting a functional configuration of an information processing device according to a second modification example.
FIG. 10 depicts an example of image information.
FIG. 11 depicts an example of question candidate information.
FIG. 12 depicts an example of image information.
FIG. 13 depicts an example of question candidate information.

### DETAILED DESCRIPTION

An embodiment described herein is to provide an information processing device and an information processing method that can provided a suggested question (or answer prompt) matching a user's thoughts when the user provides a picture or image that concerns the user's questions or thoughts.

In general, according to one embodiment, an information processing device for in-store customer shopping support includes a communication interface, a storage unit, and a processor. The processor is connected to communication interface and the storage unit. The processor is configured to: receive image information corresponding to an image from a user terminal via the communication interface; execute image analysis processing on the image information to identify content of the image from the user terminal; acquire question history information correlated to the identified content of the image from the storage unit, the question history information corresponding to previous user questions associated with the content of the image; generate candidate questions from the acquired question history information; cause the generated candidate questions to be displayed to a user of the user terminal in a selectable state; acquire answer text corresponding to a candidate question selected by the user by inputting the selected question candidate to a generative model functionalized to output answer text; and cause the acquired answer text to be provided to the user of the user terminal.

Certain example embodiments of an information processing system will now be described with reference to the drawings. In an embodiment described below, an example is applied to a store such as a supermarket. The present disclosure is not limited to the example embodiments provided for purposes of explanation. Variations and modifications to described examples will become apparent to those of ordinary skill in the art, and such variations and modifications are included in the scope of the present disclosure. Moreover, various omissions, replacements, changes, and combinations of example elements can be made without departing from the scope of the present disclosure.

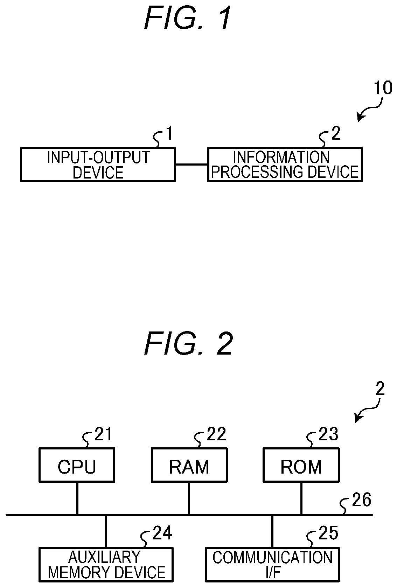

FIG. 1 is a schematic view of an information processing system 10 according to an embodiment. The information processing system 10 has an input-output device 1 and an information processing device 2.

The input-output device 1 is, for example, a portable terminal device (also referred to as a portable terminal) such as a smartphone. The input-output device 1 is, for example, a portable terminal owned by a customer or the like. In some examples, input-output device 1 may be a tablet-type portable terminal. The input-output device 1 may also be lent to the user by the store.

The input-output device 1 acquires an image and outputs the acquired image to the information processing device 2. The input-output device 1 also acquires question candidate information from the information processing device 2 and provides the question candidate information to the user. In general, the question candidate information corresponds to the image provided by the input-output device 1. The input-output device 1 may also acquire answer text or answer information (corresponding to a user-selected question candidate) from the information processing device 2 and provide the answer text or information to the user.

The information processing device 2 is, for example, a store server, a system server device, or the like. The information processing device 2 may be managed by a separate operating company in some examples. In the present embodiment, the information processing device 2 is a computer providing a generative AI that performs automated generation of text. For example, the generative AI is a large language model (LLM). For example, in response to a question about a particular merchandise item, the large language model generates answer text. In other examples, the large language model may generate an answer text in response to a question from a store clerk or other user regarding the handling of a POS terminal or other device.

The information processing device 2 can be configured as one or a plurality of computers. In the present example, information processing device 2 also supports a sales promotion of the merchandise items available for sale at the store. The sale promotion may be selected based on a question submitted via the input-output device 1. The information processing device 2 is connected to the input-output device 1, for example, via a communication line such as a mobile network.

A hardware configuration of information processing device 2 will now be described with reference to FIG. 2. FIG. 2 is a block diagram showing an example of the hardware configuration of the information processing device 2 according to an embodiment. As shown in FIG. 2, the information processing device 2 has a central processing unit (CPU) 21, a random-access memory (RAM) 22, a read-only memory (ROM) 23, an auxiliary memory device 24, and a communication interface (I/F) 25.

The CPU 21 is a control entity. The RAM 22 is used to load a program and various data therein. The ROM 23 stores various programs that can be executed by CPU 21. The auxiliary memory device 24 stores various programs and data. The communication I/F 25 is an interface for data communication with the input-output device 1.

The CPU 21, the RAM 22, the ROM 23, the auxiliary memory device 24, and the communication I/F 25 are connected to each other via a bus 26. The CPU 21, the RAM 22, and the ROM 23 form a control unit. That is, the control unit executes control processing for the information processing device 2 by having the CPU 21 operate according to a control program stored in the ROM 23 or the auxiliary memory device 24 and loaded in the RAM 22.

The auxiliary memory device 24 is a nonvolatile memory such as a hard disk drive (HDD) or a flash memory in which information is held even when the power is turned off. The auxiliary memory device 24 is an example of a memory unit. The auxiliary memory device 24 stores received image information, received question information, image analysis information, question history information, answer text, and acquired merchandise information, generated question candidate information, and generated answer information.

The information processing device 2 is generally installed in a secure environment. The secure environment can be a local environment in which the information processing device 2 is arranged and used. Since text information provided to the information processing device 2 may include customer identifying information, customer personal information, or the like, this localized (secure) configuration enables the information processing device 2 to use such information in the local environment while providing protection of customer personal information and privacy.

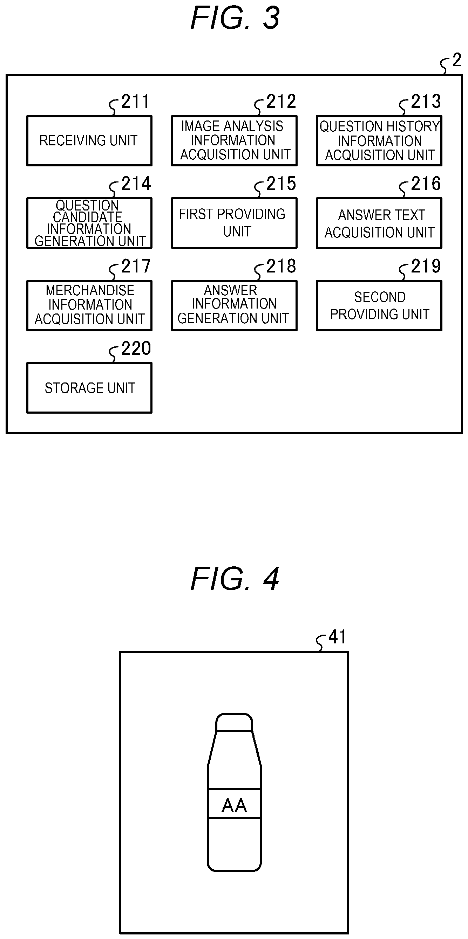

FIG. 3 is a block diagram showing an example of the functional configuration of the information processing device 2 according to an embodiment. As shown in FIG. 3, the information processing device 2 has a receiving unit 211, an image analysis information acquisition unit 212, a question history information acquisition unit 213, a question candidate information generation unit 214, a first providing unit 215, an answer text acquisition unit 216, a merchandise information acquisition unit 217, an answer information generation unit 218, a second providing unit 219, and a storage unit 220. However, the functional configuration of the information processing device 2 is not limited to this example.

The receiving unit 211 receives image information representing an image that is associated with a question of a user. Specifically, the receiving unit 211 receives an image from the input-output device 1. The image may be of a merchandise item (or other a "question object") about which a user has a question. In this example, the receiving unit 211 receives image information representing an image of a merchandise item from the input-output device 1.

The image information will now be described with reference to FIG. 4. FIG. 4 depicts a representative example of image information according to the present embodiment. Image information 41 shown in FIG. 4 is, for example, an image of a merchandise item available for sale at the store. The image in FIG. 4 is an image of an item with a merchandise name "AA" displayed thereon. The image information 41 could also include, therewith or therein, personal information (customer information) such as a name, telephone number, and/or email address of the user transmitting the image information 41. The customer information may include information about the stores previously used by the user, a purchase history indicator, or the like. The receiving unit 211 stores the received image information 41 in the auxiliary memory device 24.

The image analysis information acquisition unit 212 executes image analysis processing on the image information and acquires image analysis information. Specifically, the image analysis information acquisition unit 212 executes image analysis processing on the image information received by the receiving unit 211 and acquires image analysis information. For example, by executing image analysis processing on the image information 41 shown in FIG. 4, the image analysis information acquisition unit 212 acquires image analysis information indicating that the merchandise name "AA" is present in the analyzed image. The image analysis information acquisition unit 212 stores the acquired image analysis information in the auxiliary memory device 24.

While the image analysis is not limited to any particular method, an object recognition technique or text recognition technique may be used to identify the merchandise item shown in the image. Object recognition processing can also be referred to as generic object recognition.

Referring back to FIG. 3, the question history information acquisition unit 213 acquires question history information. The question history information provides a question history associated with the result of image analysis (image analysis information). For example, question histories are provided for each of the different merchandise items available at the store. For example, a question history provides a list, a summary, or the like of previous questions asked by previous customers about a particular merchandise item. The question histories may be stored in the auxiliary memory device 24. If the result of image analysis is that the merchandise name "AA" is identified, the question history information acquisition unit 213 extracts the question history information associated with the merchandise name "AA" from the auxiliary memory device 24.

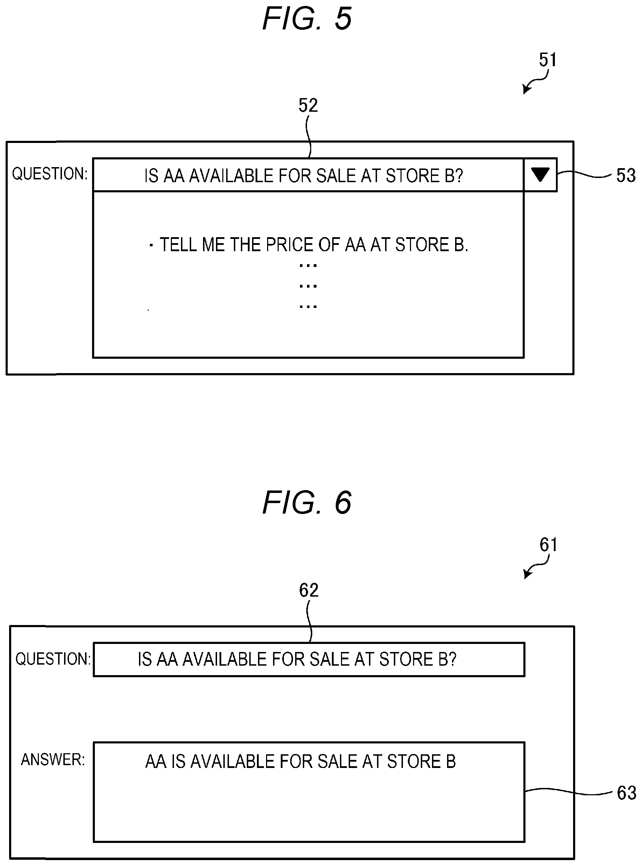

The question candidate information generation unit 214 generates question candidate information. The question candidate information indicates one or more question candidates (and question content corresponding thereto). The question candidates (candidate questions) are generated based on the question history information. The question candidate information will be described with reference to FIG. 5. FIG. 5 depicts an example of a display of question candidate information according to an embodiment. In the question candidate information display 51 shown in FIG. 5, a plurality of question candidates 52 are shown. The question candidates 52 can then be selected by a user as appropriate rather than requiring the user to type in or otherwise input a question. In FIG. 5, a pull-down button 53 is shown so that the user can select a question candidate from the plurality of question candidates 52.

For example, if the question history associated with the merchandise name "AA" includes a question regarding whether the merchandise item with the merchandise name "AA" is available for sale at the store, the question candidate information generation unit 214 generates a question such a "Is AA available for sale at store B?" If the question history associated with the merchandise name "AA" also includes a question (or request) regarding the sales price of the merchandise item with the merchandise name "AA" the question candidate information generation unit 214 generates a question or prompt such as "Tell me the price of AA at store B." The question candidate information generation unit 214 then generates the question candidate information display 51 using each generated question as a question candidate 52.

Regarding use of "store B" to indicate the store name in this process, the store name may be acquired from the question history information or in the customer information and extracted and then added to the question content as appropriate. As for the ordering of the display of the question candidates, statistical information such as the frequency of appearance in the associated question history or otherwise may be acquired from the auxiliary memory device 24 and the question candidates may be displayed in order started from the highest frequency.

Referring back to FIG. 3, the first providing unit 215 provides the question candidate information in a selectable state to the user. Specifically, the first providing unit 215 provides the question candidate information generated by the question candidate information generation unit 214 in a selectable state to the user. For example, the first providing unit 215 outputs information for the question candidate information display 51 to the input-output device 1 and thus provides a question candidate information display 51 to the user permitting a question to be selected from the candidates.

The receiving unit 211 receives question information matching the question candidate selected by the user. Specifically, the receiving unit 211 receives question information from the input-output device 1. The question information may include personal information such as the name, telephone number, and email address of the user asking the question. The receiving unit 211 stores the received question information in the auxiliary memory device 24.

The answer text acquisition unit 216 inputs the question information corresponding to the selected question candidate to a generative model functionalized to output answer text corresponding to the input question. The answer text acquisition unit 216 acquires the answer (answer text) output by the generative model.

For example, the answer text acquisition unit 216 inputs the selected question candidate along with indication information (collectively referred to as a prompt) to a large language model and thus the large language model generates and outputs answer text that answers the question according to the prompt. In this example, the answer text includes merchandise information related to the question subject and a sentence about sales promotion related to a merchandise item. The merchandise information is, for example, the classification of the merchandise item, the name of the related merchandise item, or the like. The question text may be considered as included in the prompt.

The answer text acquisition unit 216 generates the prompt for answering the question from the user, giving merchandise information about the question subject, providing a sentence about sales promotion of the merchandise item, and the like. The prompts may be prepared in advance and stored in the auxiliary memory device 24 or may be dynamically generated. The prompt may include a description indicating an information source (source) to be used in providing an answer. For example, the information source may store information about a particular merchandise item or the like. Moreover, if the image information includes or can be associated with customer information, the customer information may be added to the prompt. Thus, the answer text can particularly reflect or be appropriate to the provided customer information. The answer text acquisition unit 216 stores the acquired answer text in the auxiliary memory device 24.

The merchandise information acquisition unit 217 acquires merchandise information about a merchandise item. Specifically, the merchandise information acquisition unit 217 acquires merchandise information from the auxiliary memory device 24, The merchandise information is about a merchandise item and can be used for generating the answer text or a portion thereof. The merchandise item can be a target of a sales promotion. The merchandise information can be a merchandise classification, a merchandise code, a merchandise name, and/or a price of the merchandise item. The sale promotion of a merchandise item can be a price reduction, information indicating the popularity of an item (e.g., a number of recent sales or the like), and/or information related to a targeted sales promotion event. A merchandise item may be selected for a sales promotion based on stock levels at the store, planned promotional efforts, or the like.

The answer information generation unit 218 generates answer information including the answer text and merchandise information. Specifically, the answer information generation unit 218 generates answer information including the answer text acquired by the answer text acquisition unit 216 and the merchandise information acquired by the merchandise information acquisition unit 217. FIG. 6 is a schematic view showing an example of an answer information screen according to an embodiment. Answer information display 61 shown in FIG. 6 shows the question candidate 62 selected by the user and a corresponding answer text 63.

For example, if the question candidate 62 is "Is AA available for sale at store B?", the answer text 63 can be "AA is available for sale at store B". In the answer information display 61, though specific additional information about the merchandise item is not illustrated, the price of the item with the merchandise name "AA" may also be included in the content of the answer text 63.

Referring back to FIG. 3, the second providing unit 219 provides the answer text to the user. Specifically, the second providing unit 219 provides the answer text acquired by the answer text acquisition unit 216 to the user. For example, the second providing unit 219 outputs the answer text to the input-output device 1 and thus provides the answer text to the user.

The second providing unit 219 also provides answer information for the answer information display 61 to the user. Specifically, the second providing unit 219 provides answer information as generated by the answer information generation unit 218 to the user via the answer information display 61. For example, the second providing unit 219 outputs the answer information to the input-output device 1 and thus provides an answer information display 61 to the user.

The storage unit 220 stores a question candidate that was selected by the user as question history information in the memory unit.

The storage unit 220 also stores answer information as part of the question history information in the memory unit. Specifically, the storage unit 220 stores the answer information generated by answer information generation unit 218 in the auxiliary memory device 24 as part of the question history information.

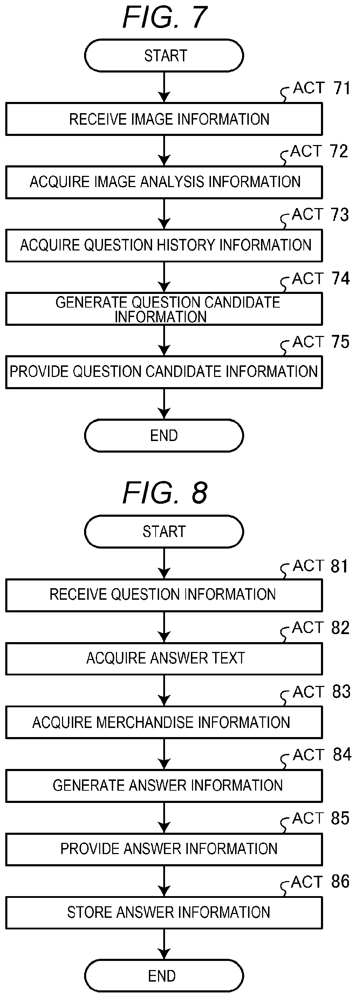

The control processing of the information processing device 2 will now be described with reference to FIGS. 7 and 8. FIGS. 7 and 8 are flowcharts showing an example of the control processing of an information processing device 2 according to an embodiment. FIG. 7 illustrates the control processing to provide a question candidate to the user.

The receiving unit 211 receives image information (an image) associated with a question by the user from the input-output device 1 (ACT 71). Subsequently, the image analysis information acquisition unit 212 executes image analysis processing on the image information and acquires an image analysis result or information associated therewith (ACT 72). Next, the question history information acquisition unit 213 acquires question history information deemed to be associated with the result of image analysis in the auxiliary memory device 24 (ACT 73).

Subsequently, the question candidate information generation unit 214 generates question candidate information representing one or more question candidates based on the question history information(ACT 74). Next, the first providing unit 215 provides the question candidate information to the user in a selectable state (ACT 75). After this, this particular processing of the information processing device 2 ends.

Thus, the user can review the question candidates considered to match or be correlated to the image supplied by the user. The user can then select a question candidate best reflecting the user's intended question from among the question candidates. Therefore, the information processing device 2 can provide information reflecting the user's intended question based on the image inputted by the user.

FIG. 8 illustrates control processing to provide the user with an answer to a question candidate. Initially, the receiving unit 211 receives question information representing the question candidate selected by the user by using the input-output device 1 (ACT 81). Subsequently, the answer text acquisition unit 216 inputs the received question candidate information to a generative model functionalized to output answer text corresponding to the question content, and thus acquires the answer text output by the generative model (ACT 82). Next, the merchandise information acquisition unit 217 acquires merchandise information about the merchandise item corresponding to the answer text from the auxiliary memory device 24 (ACT 83).

Next, the answer information generation unit 218 generates answer information (an answer) from the answer text (acquired by the answer text acquisition unit 216) and the merchandise information (acquired by the merchandise information acquisition unit 217) (ACT 84). Next, the second providing unit 219 provides the answer to the user. The second providing unit 219 also provides the answer information display 61 to the user (ACT 85).

Next, the question candidate selected by the user is stored by the storage unit 220 as question history information in the auxiliary memory device 24. The storage unit 220 also stores the answer information as question history information in the auxiliary memory device 24 (ACT 86). After this, the processing of the information processing device 2 ends. Thus, the user can see the answer corresponding to the selected question candidate.

As described above, the information processing device 2 according to this embodiment receives image information associated with a question by a user, executes image analysis processing on the image information, acquires image analysis information representing from the image analysis on the image information, acquires a question history associated with the image analysis result (image analysis information), generates question candidates based on the question history information, and provides question candidates to the user. The information processing device 2 then sends a selected question candidate to a large language model, acquires answer text output by the large language model, and provides the answer to the user.

Thus, input of an image by the user can be used to generate question candidates, the user then selects a candidate, the candidate is input a generative AI model that provides an answer without the user being otherwise required to type or input a question without structure. Therefore, the information processing device 2 can provide suggested question content reflecting the user's thought from just the submitted image.

The above embodiment can be implemented with modifications by changing configurations or functions of the above devices. In the following description, some modification examples are described as other embodiments. In the description below, differences from the already described embodiments are mainly described and as aspects that are substantially the same as those already described are not necessarily additionally described. The modification examples may be implemented separately or may be combined where appropriate.

### First Modification Example

The supplied image information may include coordinate information representing a position or area particularly designated or specified in the image by the user. For example, if a plurality of merchandise items are shown in the same image, the image information can include coordinate information indicating a particular one of the items shown in the image. Here, the coordinate information may be two-dimensional coordinates on the image indicating a position of a tap operation or the like performed by the user on the displayed image. The coordinate information is set, for example, by a touch operation by the user on a specified merchandise item of the plurality of merchandise items. In this case, the image analysis information acquisition unit 212 of the information processing device 2 executes image analysis processing on the portion of the image indicated by the coordinate information, and thus acquires image analysis information representing the result of image analysis on the image at the particular coordinates.

The question history information acquisition unit 213 then acquires question history information correlated with the result of image analysis on the image region or the like at the particular coordinates. The question candidate information generation unit 214 generates question candidate information based on the question history information. The first providing unit 215 provides the question candidate information to the user. Thus, the information processing device 2 can generate a question about the particular merchandise item designated by the user.

### Second Modification Example

In an embodiment, the image information is related to a merchandise item available for sale at the store or the like. In a second modification example, the image information relates to a device used at the store or the like.

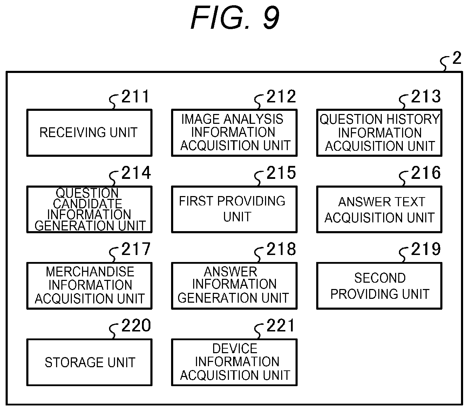

FIG. 9 is a block diagram showing an example of the functional configuration of the information processing device 2 according to the second modification example. As shown in FIG. 9, the information processing device 2 has a receiving unit 211, an image analysis information acquisition unit 212, a question history information acquisition unit 213, a question candidate information generation unit 214, a first providing unit 215, an answer text acquisition unit 216, a merchandise information acquisition unit 217, an answer information generation unit 218, a second providing unit 219, a storage unit 220, and a device information acquisition unit 221.

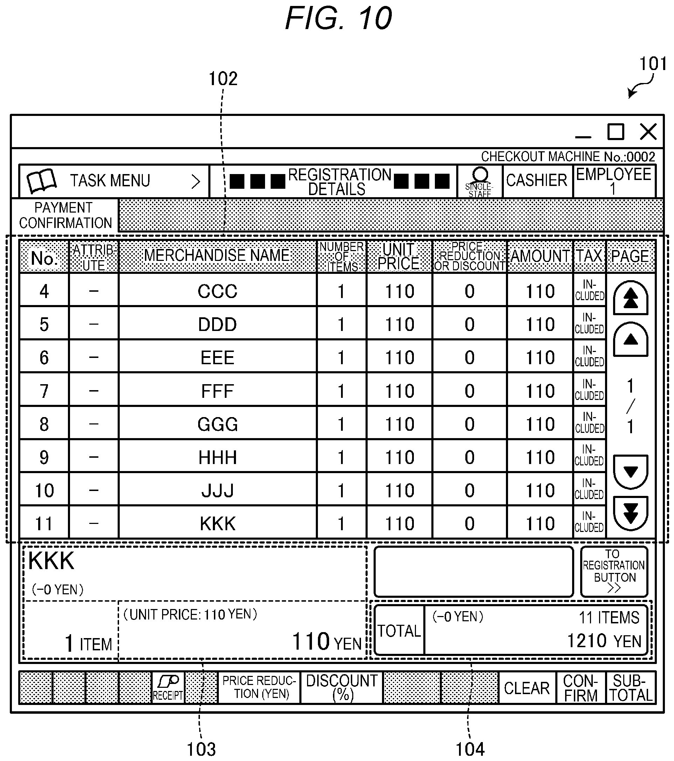

The receiving unit 211 receives image information from the input-output device 1. Some portion of the image information, or content therein, is associated with a question the user has. In the second modification example, the question may relate to operation of the input-output device 1. Here, the input-output device 1 can be a device used at the store, for example, a POS terminal. The image information as it relates to the second modification example will now be described with reference to FIG. 10. FIG. 10 depicts an example of the image information related to the second modification example.

For example, image information 101 shown in FIG. 10 represents an image of the display screen of a POS terminal used at the store, and shows merchandise registration information 102 showing a list of merchandise items registered in a sales transaction using the POS terminal. The image information 101 also includes individual merchandise item information 103 region reflecting information about an individual merchandise item such as the number of items of the same type and the unit price of a merchandise item named "KKK." Such information may also be shown as part of an entry (line item) in the merchandise registration information 102. Also provided is an amount information 104 region showing the total value of registered items in the transaction. The image information 101 may also include information such as the identifier of the POS terminal or the identifier of the user using the POS terminal.

Referring back to FIG. 9, the image analysis information acquisition unit 212 executes image analysis processing on the received image information 101 and acquires image analysis information. The question history information acquisition unit 213 acquires question history information from the auxiliary memory device 24 based on the image analysis information. The question candidate information generation unit 214 generates question candidate information based on the acquired question history information.

For example, if the image analysis indicates the image information is of the screen of the POS terminal, the question history information acquisition unit 213 acquires a question history associated with the POS terminal from the auxiliary memory device 24. Then, the question candidate information generation unit 214 generates question candidate information with question candidates displayed in order from the highest frequency of appearance in the question history.

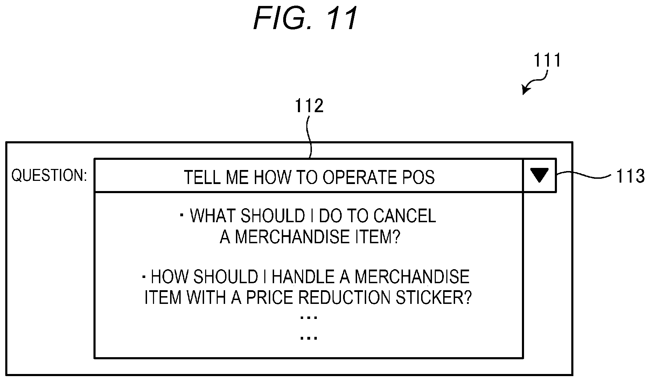

The question candidate information will now be described with reference to FIG. 11. FIG. 11 shows an example of the question candidate information according to the second modification example. Question candidate information display 111 shown in FIG. 11 shows a plurality of question candidates 112. Also, a pull-down button 113 is shown so that the user can select one question candidate from among the plurality of question candidates 112.

As the question candidate 112 shown in FIG. 11, questions or requests such as "Tell me how to operate POS.", "What should I do to cancel a merchandise item?", "How should I handle a merchandise item with a price reduction sticker?" or the like relating to operations of the POS terminal are shown.

Referring back to FIG. 9, the first providing unit 215 provides the question candidate information display 111 (or information corresponding thereto) to the input-output device 1 and thus provides the question candidate information display 111 to the user. At this point, the question candidates included in the question candidate information display 111 may not reflect the user's thoughts or intentions. In this case, the user redesignates or selects the image to be correlated with the questions, and, for example, image information including two-dimensional coordinates of a particular designated image region selected by the user can be transmitted from the input-output device 1 to the information processing device 2.

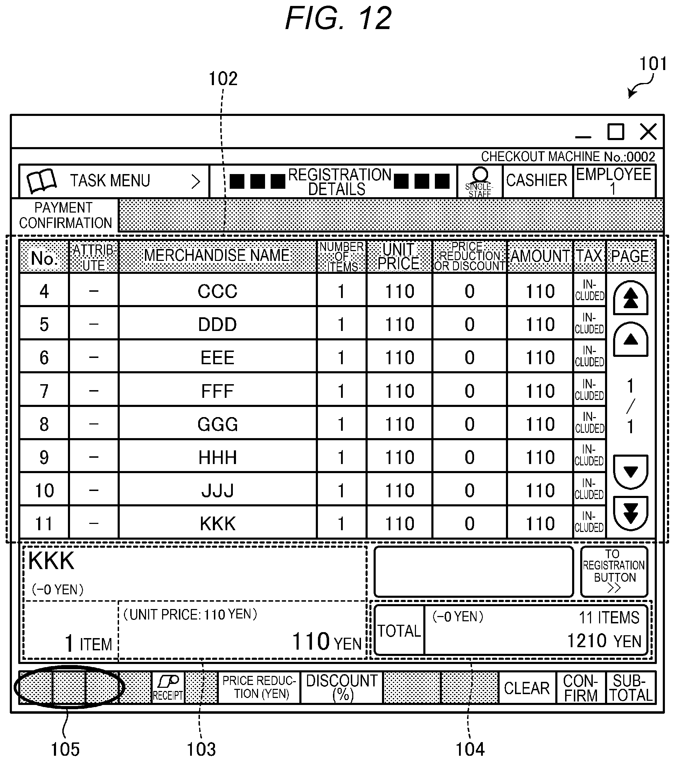

Aspects related to two-dimensional coordinates will now be described with reference to FIG. 12. FIG. 12 depicts an example of the image information related to the second modification example. FIG. 12 shows a designated image portion 105 that has been designated (selected) by the user. The designated image portion 105 is information in addition to the image information 101 shown in FIG. 10. The designated image 105 shown in FIG. 12 is, for example, an image portion related to an operation indicator of the POS terminal.

Referring back to FIG. 9, the receiving unit 211 again receives the image information 101 but this time including the user-selected (designated) coordinate information. The image analysis information acquisition unit 212 executes image analysis processing on the image region the image information 101 at or around the provided coordinate information, and thus acquires image analysis information. The question history information acquisition unit 213 acquires question history information from the auxiliary memory device 24 associated with the result of image analysis. The question candidate information generation unit 214 generates question candidates based on the question history information.

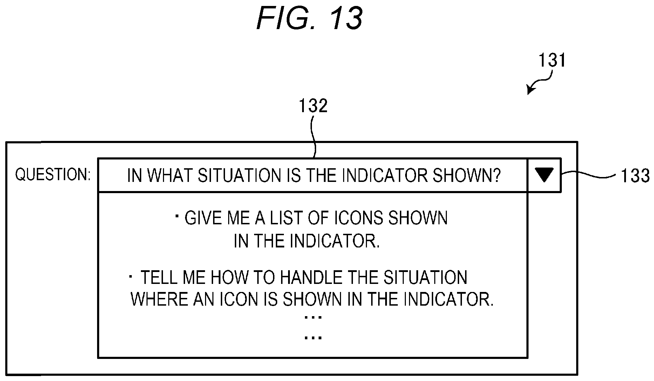

The question candidate information will now be described with reference to FIG. 13. FIG. 13 shows an example of the question candidate information in the second modification example. Question candidate information display 131 shown in FIG. 13 shows a plurality of question candidates 132. Also, a pull-down button 133 is shown so that the user can select one question candidate from among the plurality of question candidates 132.

As the question candidates 132 shown in FIG. 13, for example, "In what situation is the indicator shown?", "Give me a list of icons shown in the indicator.", "Tell me how to handle the situation where an icon is shown in the indicator." or the like related to indicator region (designated region) of the POS terminal display screen.

Referring back to FIG. 9, the first providing unit 215 outputs the question candidate information display 131 (or information related thereto) to the input-output device 1 and thus provides the question candidate information display 131 to the user. The receiving unit 211 receives the question candidate selected by the user from the input-output device 1. The answer text acquisition unit 216 inputs the selected question candidate to a large language model functionalized to output an answer corresponding to the question candidate, and thus acquires answer text output by the large language model.

The device information acquisition unit 221 acquires device information related to the answer text as necessary. Specifically, the device information acquisition unit 221 acquires device information from the auxiliary memory device 24. The device information can be, for example, an operation manual of the device or a basic procedure manual for the device.

The answer information generation unit 218 generates answer information based on the question candidate, the answer text, and the device information.

The storage unit 220 stores the question candidate selected by the user, the answer text acquired by the answer text acquisition unit 216, and the device information acquired by the device information acquisition unit 221 in correlation with each other as question history information in the auxiliary memory device 24. Thus, for example, even if a question candidate that does not reflect the user's thought is provided from the information processing device 2, the user may again designate an image and other question candidates can be supplied. The user may designate an image region by including two-dimensional coordinates along with the image or image information.

### Third Modification Example

In an embodiment, the information processing device 2 incorporates a large language model and is configured to be used in a local or restricted networking environment. However, this is not necessarily required. The information processing device 2 may be in a cloud environment provided with high security or the like. A cloud environment with high security is a cloud environment that is not made available to the public via the internet and may be connected to an in-house server environment via a communication line with high confidentiality.

A program executed by the information processing device 2 according to an embodiment may be stored in a computer connected to a network such as the internet and then downloaded via the network and thus provided. Also, a program executed by the information processing device 2 according to an embodiment may be provided or distributed via a network such as the internet.

A program executed by any device in the above embodiments may be incorporated in advance in the ROM, a memory unit, or the like of the device. Such a program may be recorded as a file in an installable format or an executable format in a non-transitory, computer-readable recording medium such as a CD-ROM, a flexible disk (FD), a CD-R, or a digital versatile disk (DVD).

Also, a program executed by a device in an above embodiment may be stored in a computer connected to a network, such as the internet, and then downloaded via the network. Also, a program in an above embodiment may be configured to be provided or distributed via a network, such as the internet.

While an embodiment of the present disclosure has been described, this embodiments has been presented by way of example only, and is not intended to limit the scope of the disclosure. Indeed, the novel embodiment and the modification examples thereof described herein may be embodied in a variety of other forms; furthermore, various omissions, substitutions, changes and combinations in the form of the embodiment described herein may be made without departing from the scope of the disclosure as defined by the appended claims. The accompanying claims and their equivalents are intended to cover such forms or modifications as would fall within the scope of the disclosure.

## Claims

1. An information processing device for in-store customer shopping support, the device comprising:
a communication interface;
a storage unit; and
a processor connected to the communication interface and the storage unit, the processor configured to:
receive image information corresponding to an image from a user terminal via the communication interface;
execute image analysis processing on the image information to identify content of the image from the user terminal;
acquire question history information correlated to the identified content of the image from the storage unit, the question history information corresponding to previous user questions associated with the content of the image;
generate candidate questions from the acquired question history information;
cause the generated candidate questions to be displayed to a user of the user terminal in a selectable state;
acquire answer text corresponding to a candidate question selected by the user by inputting the selected question candidate to a generative model functionalized to output answer text; and
cause the acquired answer text to be provided to the user of the user terminal.

2. The information processing device according to claim 1, wherein the processor is further configured to:
acquire merchandise information when the content of the image is a merchandise item; and
include the acquired merchandise information in the answer text.

3. The information processing device according to claim 2, wherein the merchandise information is acquired via the communication interface and/or from the storage unit.

4. The information processing device according to any of claims 1 to 3, wherein the storage unit is an auxiliary memory device.

5. The information processing device according to any of claims 1 to 4, wherein the image information includes coordinate information indicating a region in the image that has been designated by the user.

6. The information processing device according to claim 5, wherein the processor executes the image analysis processing on the image information to identify the content of the region of the image.

7. The information processing device according to any of claims 1 to 6, wherein the processor is further configured to:
acquire device information when the content of the image is a device screen; and
include the acquired device information in the answer text.

8. Th information processing device according to claim 7, wherein the device information includes an operation manual.

9. The information processing device according to any of claims 1 to 8, wherein the processor is further configured to:
store the selected question candidate and the answer text in correlation with each other in the storage unit as question history information.

10. An information processing method for in-store customer shopping support, the method comprising:
receiving image information corresponding to an image from a user terminal via a communication interface;
executing image analysis processing on the image information to identify content of the image from the user terminal;
acquiring question history information correlated to the identified content of the image from a storage unit, the question history information corresponding to previous user questions associated with the content of the image;
generating candidate questions from the acquired question history information;
causing the generated candidate questions to be displayed to a user of the user terminal in a selectable state;
acquiring answer text corresponding to a candidate question selected by the user by inputting the selected question candidate to a generative model functionalized to output answer text; and
causing the acquired answer text to be provided to the user of the user terminal.

11. The information processing method according to claim 10, further comprising:
acquiring merchandise information when the content of the image is a merchandise item; and
including the acquired merchandise information in the answer text.

12. The information processing method according to claim 11, wherein the merchandise information is acquired via the communication interface and/or from the storage unit.

13. The information processing method according to any of claims 10 to 12, wherein the image information includes coordinate information indicating a region in the image that has been designated by the user, preferably wherein the image analysis processing on the image information to identifies the content of the region of the image.

14. The information processing method according to any of claims 10 to 13, further comprising:
acquiring device information when the content of the image is a device screen; and
including the acquired device information in the answer text, preferably wherein the device information includes an operation manual.

15. The information processing method according to any of claims 10 to 14, further comprising:
storing the selected question candidate and the answer text in correlation with each other in the storage unit as question history information.
